# EUROPEAN PATENT APPLICATION

(11) **EP 2 080 921 A2**
(43) Date of publication of application: **22.07.2009**
(21) Application number: 09000450.8
(22) Date of filing: 14.01.2009
(51) Int. Cl.: F16C 33/66

(54) **Lubricating device for a rolling bearing**

(30) Priority: 16.01.2008 JP 2008006737
(71) Applicant: JTEKT Corporation, Osaka-shi Osaka 542-8502 (JP)
(72) Inventor: Nakamura, Takeshi, Osaka-shi Osaka 542-8502 (JP)
(74) Representative: Schaeberle, Steffen

(57) **Abstract**

A rolling bearing device includes a first bearing ring member (1) having a first raceway; a second bearing ring member (2) having a second raceway; and a plurality of rolling elements interposed between the first raceway (1a) and the second raceway (2a). An elastic grease supplying container (6) is disposed between the first bearing ring member and the second bearing ring member and has a nozzle (5) for supplying grease toward at least one of the first raceway and the second raceway, the grease supplying container having a restoring property for returning to its original shape when the grease supplying container is extended.

## Description

### BACKGROUND OF THE INVENTION

The present invention relates to a rolling bearing device, and more particularly to a rolling bearing device which is suitably used for such as a main spindle of a machine tool.

In general, a rolling bearing device having a tank in which lubricating oil for supplying lubricating oil is stored is used for a spindle which is used in a machine tool or the like and rotates at high speed (e.g., refer to JP-A-2006-194406). With this rolling bearing device, however, since the supplied lubricating oil flows out from the bearing interior to the outside, there is a possibility that it becomes impossible to maintain the lubricity of rolling elements of the rolling bearing over extended periods of time.

Accordingly, to maintain the lubricity of the rolling elements of the rolling bearing over extended periods of time, a rolling bearing has been proposed in which a gap which communicates from a grease reservoir provided adjacent to a fixed bearing ring disposed in the rolling bearing to a vicinity of a raceway surface of the fixed bearing ring is controlled so as to become a slight gap amount of such an extent that the base oil of the grease inside the grease reservoir is supplied to a vicinity of the raceway surface of the fixed bearing ring (e.g., refer to JP-A-2005-180629). However, with this rolling bearing device as well, in the same way as the above-described rolling bearing device, since the base oil of the lubricating oil flows out from the bearing interior to the outside, there is a possibility that it becomes impossible to maintain the lubricity in the rolling bearing over extended periods of time.

### SUMMARY OF THE INVENTION

The invention has been devised in view of the above-described conventional art, and its object is to provide a rolling bearing device which is capable of supplying toward a raceway a lubricant for lubricating rolling contact portions of raceways and the rolling elements of the rolling bearing while suppressing the lubricant from flowing out from the bearing interior to the outside, thereby making it possible to lubricate the rolling contact portions of the raceways and the rolling elements over extended periods of time.

To attain the above object, the present invention provides the following arrangements.
(1) A rolling bearing device comprising:
   a first bearing ring member having a first raceway;
   a second bearing ring member having a second raceway;
   a plurality of rolling elements interposed between the first raceway and the second raceway; and
   an elastic grease supplying container disposed between the first bearing ring member and the second bearing ring member and having a nozzle for supplying grease as a lubricant toward at least one of the first raceway and the second raceway, the grease supplying container being shrunk to supply the grease.
(2) The rolling bearing device according to (1), wherein the grease supplying container has a restoring property for returning to its original shape when the grease supplying container is extended.
(3) The rolling bearing device according to (1) further comprising a resilient member provided inside or outside the grease supplying container to cause the extended grease supplying container to shrink.
(4) The rolling bearing device according to (1), wherein the grease is filled in the grease supplying container in a state
   in which the grease supplying container is extended.
(5) The rolling bearing device according to (2), wherein the grease supplying container is formed of a flexible resin and has a bellows shape.
(6) The rolling bearing device according to (1), wherein an orifice is disposed in the nozzle.
   In the rolling bearing device in accordance with the above-described first aspect of the invention, a slight amount of grease which is used as a lubricant and has not become deteriorated can be supplied to rolling contact portions of the rolling elements and the raceways. In addition, since grease is difficult to flow as compared with the lubricating oil or the base oil, the grease is less likely to flow out from the bearing interior to its outside and can be held in the vicinities of the rolling elements and the raceways, so that the lubrication of the rolling elements and the raceways can be maintained over extended periods of time.
   In the rolling bearing device in accordance with the above-described second aspect of the invention, since the grease supplying container has a restoring property for returning to its original shape when the grease supplying container is extended, the grease can be supplied to the rolling contacts portions of the rolling elements and the raceways.

In the rolling bearing device in accordance with the above-described third aspect of the invention, since the resilient member is provided inside or outside the grease supplying container to cause the extended grease supplying container to shrink, even if the grease supplying container itself does not possess elasticity, elasticity can be imparted to the grease supplying container by that resilient member. Accordingly, since the rolling bearing device in accordance with the above-described second aspect of the invention has the above-described configuration, a slight amount of grease which is used as a lubricant and has not become deteriorated can be supplied to rolling contact portions of the rolling elements and the raceways. In addition, since grease is difficult to flow as compared with the lubricating oil or the base oil, the grease is less likely to flow out from the bearing interior to its outside and can be held in the vicinities of the rolling elements and the raceways, so that the lubrication of the rolling elements and the raceways can be maintained over extended periods of time.

In the rolling bearing device in accordance with the fourth aspect of the invention, the grease is difficult to flow out from the bearing interior to its outside and a slight amount of grease can be continuously supplied to and held in the vicinities of the rolling elements and the raceway, so that the lubrication of the rolling elements and the raceways can be maintained over extended periods of time.

In the rolling bearing device in accordance with the fifth aspect of the invention, the grease supplying container itself possesses elasticity, so that the use of a resilient member for extending or contracting the grease supplying container can be made unnecessary.

In the rolling bearing device in accordance with the sixth aspect of the invention, the change in the flow rate of a slight amount of grease which is discharged from the nozzle can be made small.

According to the rolling bearing device in accordance with the invention, advantages are offered in that a slight amount of a lubricant for lubricating rolling contact portions of the rolling.elements and raceways of the rolling bearing is made difficult to flow out from the bearing interior to its outside and is held in the vicinities of the rolling elements and the raceway, thereby making it possible to maintain the lubrication of the rolling contact portions of the rolling elements and the raceways over extended periods of time.

### BRIEF DESCRIPTION OF THE DRAWINGS

Fig. 1 is an explanatory cross-sectional view, taken along the axial direction, of a rolling bearing device in accordance with an embodiment of the invention;
Fig. 2 is a schematic perspective view of a grease supplying container shown in Fig. 1, and illustrates the grease supplying container which has not been extended, i.e., before it is disposed in the annular holding member;
Fig. 3 is a schematic perspective view illustrating an example of the grease supplying container having the resilient member disposed outside it; and
Fig. 4 is a cross-sectional view, taken along line A - A, of the rolling bearing device shown in Fig. 1 and in which the grease supplying container shown in Fig. 3 is used.

### DETAILED DESCRIPTION OF PREFERRED EMBODIMENTS

Referring now to the accompanying drawings, a detailed description will be given of an embodiment of a rolling bearing device in accordance with the invention. The invention is not limited to such an embodiment shown in the drawings.

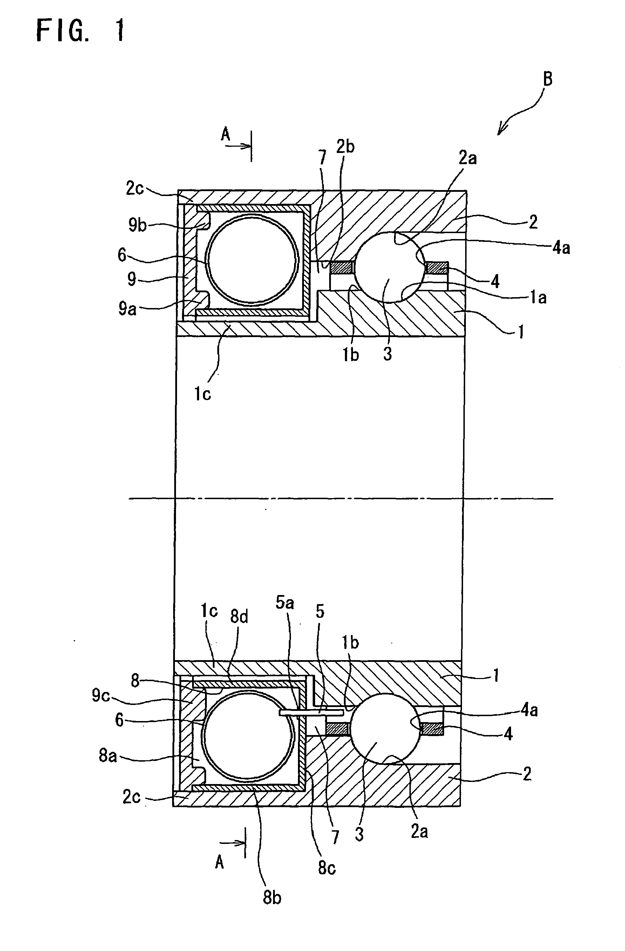

Fig. 1 is an explanatory cross-sectional view, taken along the axial direction, of a rolling bearing device B in accordance with an embodiment of the invention. The rolling bearing device B has a first bearing ring member 1 and a second bearing ring member 2. In the embodiment shown in Fig. 1, the first bearing ring member 1 functions as an inner ring, and the second bearing ring member 2 functions as an outer ring. The first bearing ring member 1 is formed in annular form and has a first raceway 1a on its outer periphery. The second bearing ring member 2 is formed in annular form in the same way as the first bearing ring member 1 and has a second raceway 2a on its inner periphery. The first bearing ring member 1 and the second bearing ring member 2 are disposed concentrically, and an unillustrated shaft is fitted in the first bearing ring member 1.

A plurality of rolling elements (balls) 3 are interposed between the first raceway 1a of the first bearing ring member 1 and the second raceway 2a of the second bearing ring member 2, and these rolling elements 3 are retained by an annular retainer 4. The retainer 4 is fabricated from a synthetic resin such as a phenol resin and has pockets 4a arranged at predetermined intervals in the circumferential direction to retain the plurality of rolling elements 3. The retainer 4 is disposed between an outer peripheral surface 1b of the first bearing ring member 1 and an inner peripheral surface 2b of the second bearing ring member 2 so as to be substantially concentric with the first bearing ring member 1 and the second bearing ring member 2. The rolling elements 3 are held at predetermined intervals in the circumferential direction by being accommodated in the respective pockets 4a of the retainer 4, and are adapted to roll between the first raceway 1a of the first bearing ring member 1 and the second raceway 2a of the second bearing ring member 2.

An elastic grease supplying container 6, which has a nozzle 5 for supplying grease as a lubricant toward the first raceway 1a and has a restoring property for returning to its original shape when the grease supplying container 6 extended, is disposed between the first bearing ring member 1 and the second bearing ring member 2.
The grease supplying container 6 is disposed in a recess 8a of an annular holding member 8 fixed to the inner peripheral surface of the second bearing ring member 2. The annular holding member 8 is formed in annular form and has the recess 8a which is recessed from the opposite side to the rolling element side, as viewed in the axial direction, of the second bearing ring member 2 (hereafter referred to simply as the axial direction unless otherwise specified), toward the rolling element side in the axial direction. In the annular holding member 8, an outer peripheral surface of its outer peripheral portion 8b is fixed to an inner peripheral surface of the second bearing ring member 2, and a side surface of its lateral portion 8c on the rolling element side in the axial direction abuts against a stepped portion of the second bearing ring member 2. An inner peripheral portion 8d is formed inwardly, as viewed in the radial direction of the second bearing ring member 2 (hereafter referred to simply as the radial direction unless otherwise specified), of the recess 8a of the annular holding member 8. The lateral portion 8c prevents the elastic grease supplying container 6 from coming into contact with the stepped surface of the first bearing ring member 1. The inner peripheral portion 8d prevents the elastic grease supplying container 6 from coming into contact with the inner peripheral surface of the first bearing ring member 1.

A cover member 9 is fitted in the opening of the recess 8a of the annular holding member 8 on the opposite side to the rolling elements in the axial direction so as to close the opening. The cover member 9 has an annular inner projecting portion 9a and an annular outer projecting portion 9b which are respectively provided on a radially inner side and a radially outer side on its rolling element side in the axial direction. An inner peripheral surface of the inner projecting portion 9a abuts against an outer peripheral surface of the inner peripheral portion 8d of the annular holding member 8, while an outer peripheral surface of the outer projecting portion 9b abuts against an inner peripheral surface of the outer peripheral portion 8b of the annular holding member 8, thereby allowing the cover member 9 to be fitted to the opening of the recess 8a of the annular holding member 8.

The nozzle 5 is cylindrical in shape, and an inside diameter portion of one end thereof is open toward the first raceway 1a of the first bearing ring member 1 on the radially inner side of the retainer 4 and on the radially outer side of the first bearing ring member 1 in a range where the retainer 4 and the first bearing ring member 1 radially overlap, while an inside diameter portion of the other end thereof is open and communicates with the interior space of the grease supplying container 6. Thus, the nozzle 5 allows the interior space of the grease supplying container 6 and the outside to communicate with each other. The grease in the interior space of the grease supplying container 6 is adapted to pass through the inside diameter portion of the nozzle 5 and come out from the opening at the inside diameter portion of the one end of the nozzle 5. The nozzle 5 is in non-contact with the first bearing ring member 1, the retainer 4, and the rolling elements 3.

A projecting portion 5a is formed on an outer peripheral surface of the nozzle 5 at a position spaced apart a predetermined distance from the one end of the nozzle 5. Although the projecting portion 5a is formed in annular form, the projecting portion 5a is not limited to an annular one. The projecting portion 5a may be a circular arc-shaped projecting portion or may be a plurality of circular arc-shaped projecting portions. A through hole extending between a recess 8a-side wall of the lateral portion 8c and a rolling element-side wall of the lateral portion 8c is formed in the lateral portion 8c of the annular holding member 8. The size of the through hole is formed so as to allow the outer peripheral surface of the nozzle 5 to pass therethrough but not to allow the projecting portion 5a to pass therethrough. The rolling element-side surface, as viewed in the axial direction, of the projecting portion 5a is brought into surface contact with the side surface of the annular holding member 8. As a result, the nozzle 5 is positioned relative to the annular holding member 8, and the position of the opening at the inside diameter portion of the one end of the nozzle 5 is positioned in the rolling bearing device B. An urging projecting portion 9c of the cover member 9 for urging the grease supplying container 6 is formed on the rolling element side, as viewed in the axial direction, of the cover member 9 so as to press the projecting portion 5a of the nozzle 5 against the lateral portion 8c of the annular holding member 8. The urging projecting portion 9c is formed so as to overlap with the projecting portion 5a in the axial direction. The urging projecting portion 9c is formed such that an outer peripheral surface of a circumferential portion of the inner projecting portion 9a projects radially outwardly. However, it suffices if the urging projecting portion 9c is formed so as to be able to position the opening at the inside diameter portion of the one end of the nozzle 5 in the rolling bearing device B by pressing the projecting portion 5a of the nozzle 5 against the lateral portion 8c of the annular holding member 8. Further, the projecting portion 5a and the urging projecting portion 9c may not overlap in the axial direction, and the urging projecting portion 9c may be formed independently from the inner projecting portion 9a. It should be noted that a shim or the like may be interposed between the lateral portion 8c of the annular holding member 8 and the stepped surface of the second bearing ring member 2 so as to adjust the position of the opening at the inside diameter portion of the one end of the nozzle 5 in the rolling bearing device B.

In addition, the annular holding member 8 and the cover member 9, excluding those portions for pressing the projecting portion 5a of the nozzle 5 against the lateral portion 8c of the annular holding member 8, are formed so as not to tighten the grease supplying container 6. The grease supplying container 6, excluding its portion for pressing the projecting portion 5a of the nozzle 5 against the lateral portion 8c of the annular holding member 8, is able to slide in the circumferential direction of the annular holding member 8 inside the space formed by the recess 8a of the annular holding member 8 and the cover member 9. To facilitate the sliding, it is preferable to apply or coat a lubricant (grease, lubricating oil, solid lubricant, etc.) onto inner surfaces of the annular holding member 8 and the cover member 9 defining the recess 8a and onto the outer surface of the grease supplying container 6. In this embodiment, a thin layer of the same grease as the grease which is filled in the grease supplying container 6 is applied to the inner surfaces of the annular holding member 8 and the cover member 9 defining the recess 8a.

In the invention, grease is used as a lubricant for lubricating rolling contact portions of the first raceway 1a and the rolling elements 3, rolling contact portions of the second raceway 2a and the rolling elements 3 through grease which moves in consequence of the rolling of the rolling elements, sliding contact portions of the rolling elements 3 and the pocket-defining surfaces of the retainer 4 defining the pockets 4a, and sliding contact surfaces between the outer peripheral surface of the retainer 4 and the inner peripheral surface (shoulder portion) 2b of the second bearing ring member 2. This grease is directly supplied toward the first raceway 1a in the vicinities of the first raceway 1a and the rolling elements 3. This grease has low fluidity as compared with the base oil of a conventional lubricating oil or grease, and is suppressed from flowing out to the outside from a bearing interior 7 as in the case of such a lubricating oil, so that it is possible to maintain the lubrication between the first raceway 1a and the rolling elements 3 over extended periods of time.

In the rolling bearing device B, grease is filled in the interior space of the grease supplying container 6 in the state
in which the grease supplying container 6 is extended from its original shape. In the case where the grease is thus filled, the extended grease supplying container 6 possesses a restoring force with which it tends to return to its original shape, so that the grease filled in the interior space of the grease supplying container 6 is discharged from the grease supplying container 6 through the nozzle 5 by virtue of its restoring force. Since this discharged grease is continuously held in the vicinities of the first raceway 1a and the rolling elements 3 without flowing out from the bearing interior 7 to its outside, it is possible to maintain over extended periods of time the lubrication of the rolling contact portions of the first raceway 1a and the rolling elements 3, the rolling contact portions of the second raceway 2a and the rolling elements 3 through the grease which moves in consequence of the rolling of the rolling elements, the sliding contact portions of the rolling elements 3 and the pocket-defining surfaces of the retainer 4 defining the pockets 4a, and the sliding contact surfaces between the outer peripheral surface of the retainer 4 and the inner peripheral surface (shoulder portion) 2b of the second bearing ring member 2.

Thus, according to the rolling bearing device B in accordance with this embodiment, since the grease is filled in the grease supplying container 6 in the state in which the grease supplying container 6 is extended from its original shape, the grease can be discharged from the grease supplying container 6 via the nozzle 5 by the restoring force the grease supplying container 6 itself possesses even if a special power source for discharging the grease filled in the grease supplying container 6 is not used.

It should be noted that the space for disposing the grease supplying container 6 can be formed by providing an extended portion 1c and an extended portion 2c respectively on one axial end sides of the first bearing ring member 1 and the second bearing ring member 2, as shown in Fig. 1. Specifically, the extended portion 1c is formed on the one axial side of the shoulder portion which is adjacent to the axial one side of the first raceway 1a of the first bearing ring member (inner ring) 1, and an outer peripheral surface of the extended portion 1c is formed to be recessed (to be provided with a smaller diameter than) from the shoulder portion of the first bearing ring member 1. Meanwhile, the extended portion 2c is formed on the one axial side of the shoulder portion which is adjacent to the axial one side of the second raceway 2a of the second bearing ring member (outer ring) 2, and an inner peripheral surface of the extended portion 2c is formed to be recessed (to be provided with a greater diameter than) from the shoulder portion of the second bearing ring member 2. As the extended portion 1c and the extended portion 2c are thus formed, the space for disposing the grease supplying container 6 can be made large, and the capacity of the interior of the grease supplying container 6 can be made large. Hence, it becomes possible to increase the filling amount of grease which is filled in the grease supplying container 6, thereby making it possible to maintain the lubrication of the rolling bearing device B over extended periods of time.

It should be noted that the first bearing ring member may be formed by an inner ring of a rolling bearing and an inner ring spacer adjacent to that inner ring in substitution of the first bearing ring member 1 having the extended portion 1c, and the second bearing ring member may be formed by an outer ring of a rolling bearing and an outer ring spacer adjacent to that outer ring in substitution of the second bearing ring member 2 having the extended portion 2c, although these members are not shown. In addition, in this case, a shim or the like may be interposed between the inner ring and the inner ring space and/or between the outer ring and the outer ring spacer so as to adjust the position of the opening at the inside diameter portion of the one end of the nozzle 5 in the rolling bearing device B.

The nozzle 5 is integrated with the grease supplying container 6 so that the interior of the grease supplying container 6 communicates with its exterior, and its leading end is open at a position where it is slightly distanced from the outer peripheral surface 1b of the first bearing ring member 1. The length and size of the nozzle 5, as well as the position where the nozzle 5 is provided on the grease supplying container 6, are not particularly limited and are set such that the grease inside the grease supplying container 6 can be supplied by desired amounts toward the first raceway 1a and/or the second raceway 2a. In this embodiment, only one grease supplying container 6 is disposed in the rolling bearing device B, and a single nozzle 5 is mounted on the grease supplying container, 6, but a plurality of grease supplying containers 6 may be disposed in the rolling bearing device B. Further, no particular restriction is placed on the number of the nozzles 5 provided on the grease supplying container 6, and only one nozzle may be used, or a plurality of nozzles such as two to six nozzles or thereabouts may be used. In the case where a plurality of nozzles are provided on one grease supplying container 6, the portions of the grease supplying container 6 which undergo extension from the original shape need to be provided by avoiding the plurality of nozzles so that the positions of the plurality of nozzles will not change.

The flow rate of the grease which is discharged from the nozzle 5 can be controlled by, for instance, adjusting the inside diameter and the length of the inside diameter portion of the nozzle 5. It should be noted that an orifice (not shown) may be provided inside or contiguously to the nozzle 5. In the case where the orifice is provided inside or contiguously to the nozzle 5, by using an orifice having a desired inside diameter in a narrowest passage, it is possible to provide control such that the flow rate of the grease which is discharged from the nozzle 5 becomes a predetermined rate.

In the rolling bearing device B in accordance with this embodiment, as the grease supplying container 6 is disposed between the first bearing ring member and the second bearing ring member 2, the length of the inside diameter portion of the nozzle 5 can be made short as compared with the case where the grease supplying container 6 is disposed outside the space between the first bearing ring member 1 and the second bearing ring member 2. Since the length of the inside diameter portion of the nozzle 5 can be made short, even if the cross-sectional area of the inside diameter portion of the nozzle 5 is made small, the grease can be supplied from the nozzle 5 toward the first raceway 1a by the force with which the grease is extruded from the grease supplying container 6 by virtue of the restoring property of the grease supplying container 6. Since the cross-sectional area of the inside diameter portion of the nozzle 5 can be made small, slight amounts of grease can be supplied toward the first raceway 1a. Hence, the time period during which the grease can lubricate can be prolonged.
Consequently, as compared with a case where large amounts of grease are supplied toward the first raceway 1a, it is possible to suppress an increase in the rotational torque of the rolling bearing device B, the temperature rise of the rolling bearing device B due to the increase in the rotational torque, a dimensional change of the bearing due to the temperature rise, and the deterioration of the grease at the rolling contact portions and the sliding contact portions and inside the grease supplying container 6. Particularly in the case where the rolling bearing device is used for the main spindle of a machine tool, control of the temperature rise is important since the machining accuracy changes due to the dimensional change of the bearing. In this respect, if the length of the inside diameter portion of the nozzle 5 is long, the grease is difficult to flow through the inside diameter portion of the nozzle 5, so that it is necessary to enlarge the cross-sectional area of the inside diameter portion. In the case where the cross-sectional area is large, since grease which is more than necessary for the lubrication of the rolling bearing device B is supplied toward the rolling elements and the raceway, the rate at which the grease filled in the grease supplying container 6 decreases becomes high, and the time period during which the grease can lubricate becomes short. Further, due to the adherence of excess grease onto the rolling elements and the raceways, the grease agitation resistance of the rolling bearing device B becomes large, so that the rotational torque of the rolling bearing device B becomes large, and a large temperature rise results.

The grease is filled into the grease supplying container 6 in a state in which the grease supplying container 6 is extended. The grease can be filled into the grease supplying container 6 until the grease supplying container 6 is extended to a desired length with the grease supplying container 6 set in a normal state or in a compressed state. The filling of the grease into the grease supplying container 6 may be effected through the nozzle 5 disposed on the grease supplying container 6 or may be effected from a grease supply port (not shown) which is separately provided in the grease supplying container 6.

It should be noted that in the case where the grease supply port is provided in the grease supplying container 6, to prevent the leakage of the grease from that grease supply port after the supply of the grease, it is necessary to provide a measure such as by closing that great supply port, by forming one of an external thread and an internal thread at the great supply port and causing a lid with the other one of the external thread and the internal thread formed thereat to be threadedly engaged therewith, or by providing a check valve (not shown) which allows the grease to be supplied to the interior of the grease supplying container 6 but does not cause the grease inside the grease supplying container 6 to leak to the outside. In the case where the grease supply port of the grease supplying container 6 is closed by the lid, or the check valve is provided at the grease supply port of the grease supplying container 6, grease can also be refilled into the used grease supplying container 6 through the grease supply port. In cases where grease is refilled through the grease supply port or grease is refilled through the nozzle 5, there is an advantage in that this grease supplying container 6 can be reused.

The grease which is used in the rolling bearing device in accordance with the invention is not particularly limited, and grease which is generally used for rolling bearings may be used. For example, as a thickener which is used for grease, it is possible to use singly or in combination various thickener components including lithium soap such as lithium stearate and lithium 12-hydroxystearate, lithium complex soap, sodium soap, aluminum complex soap, diurea, polyurea, bentone, and polytetrafluoroethylene. As a base oil which is used for grease, it is possible to use singly or in combination various base oils including a paraffin-based mineral oil, a naphthene-based mineral oil, polyalphaolefin, diester, polyol ester, alkyl diphenyl ether, silicone oil, and perfluoropolyether. In addition, additives such as a rust inhibitor, an antioxidant, an anti-seizure agent, an extreme-pressure additive, an oiliness agent, and a resin may be added to the grease. The grease is selected in the light of the characteristics required for the rolling bearing device B. Further, as the components of the grease, it is preferable to use those which do not deteriorate the grease supplying container 6 and the nozzle 5.
Alternatively, the materials of the grease supplying container 6 and the nozzle 5 should be selected on the basis of the components of the grease. Furthermore, the filling amount of the grease which is filled in the interior space of the grease supplying container 6 is not particularly restricted, and a full amount of grease maybe filled in the interior space of the grease supplying container 6, or the grease may be filled in an amount with which a slight space is created in the interior space of the grease supplying container 6. However, it is preferable to fill the grease such that air is not mixed in as much as possible. This is to suppress the possibility of the occurrence of a situation in which the grease fails to come out from the opening at the inside diameter portion of the one end of the nozzle 5 in a case where a large quantity of air has been mixed in.

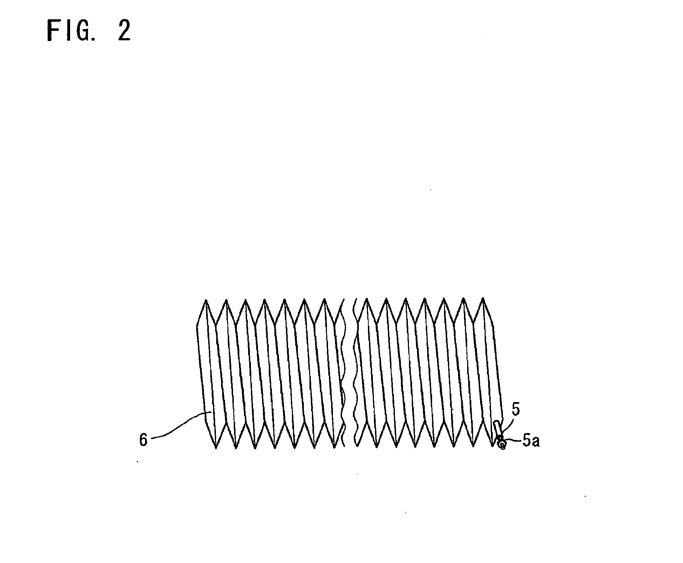

Fig. 2 is a schematic perspective view of the grease supplying container 6 shown in Fig. 1, and illustrates the grease supplying container 6 which has not been extended, i.e., before it is disposed in the annular holding member 8. This grease supplying container 6 is formed of a flexible resin and has a bellows shape. Since the grease supplying container 6 has the shape of an extendable bellows, the grease supplying container 6 has a restoring property (restoring force) with which it tends to return to its original shape when the grease supplying container 6 is extended or contracted. The grease supplying container 6 can be formed by such as blow molding, for example.

The flexible resin for constituting the grease supplying container 6 is not particularly limited insofar as it has the restoring property with which it returns to its original shape when the grease supplying container 6 is extended or contracted. From the viewpoint of the moldability of the grease supplying container 6 and its shape restoring property, it is preferable to use a synthetic resin such as polyethylene, polyamide, polyphenylsulfide, polyphenylsulfone, and soft vinyl chloride resin. Furthermore, from the viewpoint of heat resistance and oil resistance, polyamide, polyphenylsulfide, or polyphenylsulfone is more preferable.

Since the grease supplying container 6 itself shown in Fig. 2 possesses the restoring force by being extended from its original shape, a resilient member for extending or contracting the grease supplying container 6 need not be especially disposed, but a resilient member may be disposed from the viewpoint of imparting a stronger restoring force.

The resilient member for extending or contracting the grease supplying container can be provided inside or outside the grease supplying container. In the case where the resilient member is thus provided for the grease supplying container, the restoring property can be imparted to the grease supplying container even in cases where it is difficult to supply desired amounts of grease to the rolling contact portions and sliding contact portions of the rolling bearing device B because the grease supplying container does not possess the restoring property, because the restoring property is small, and because, when the grease flows through the inside diameter portion of the nozzle 5, the flow resistance of the grease is large due to the effects of the properties of the grease and the inside diameter and the length of the inside diameter portion of the nozzle 5. Further, the provision of the resilient member is also effective when large amounts of grease have been supplied to the rolling contact portions and sliding contact portions of the rolling bearing device B. It should be noted that the resilient member can be disposed not only in the case where the grease supplying container does not possess the restoring property but also in the case where it possess the restoring property.

As the resilient member, it is possible to cite, for example, a metallic spring, a resin- or rubber-made spring, or the like. The resin- or rubber-made spring can be fabricated by molding a resin or rubber into a helical shape.

The resilient member is disposed inside or outside the grease supplying container. The grease supplying container having the resilient member disposed inside it can be fabricated, for instance, by molding a grease supplying container having a desired shape by blow molding or the like, by providing in its end portion an insertion port for inserting the resilient member, and by inserting the resilient member from this insertion port and subsequently closing the insertion.port.
Meanwhile, the grease supplying container having the resilient member disposed outside it can be fabricated, for instance, by molding a grease supplying container having a desired shape by blow molding or the like in the same way as described above, and then by winding the resilient member around the outer periphery of that grease supplying container.

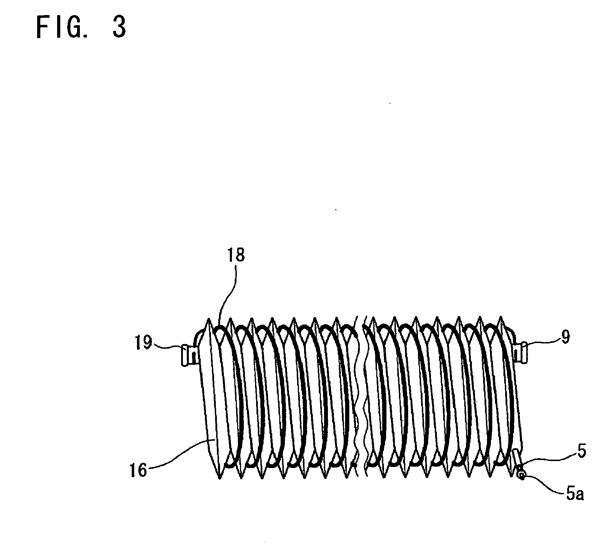

Fig. 3 shows a schematic perspective view of another example of the grease supplying container having the resilient member disposed outside it. Fig. 3 shows a grease supplying container 16 in a normal state (original shape) in which it has not been extended.

A spring-like resilient member 18 for compressing the grease supplying container 16 into its original shape is disposed around the outer periphery of the grease supplying container 16 shown in Fig. 3. The grease supplying container 16 has the bellows shape in the same way as the grease supplying container 6 shown in Fig. 2, but may have other shape insofar as it is capable of extending and contracting.

Both ends of the resilient member 18 may be in an open state, or a pair of fixing portions 19 for fixing the resilient member 18 may be disposed on both end faces of the grease supplying container 16, and the resilient member 18 may be fixed by these fixing portions 19. In the latter case, from the viewpoint of mechanical strength, the fixing portions 19 should preferably be integrally formed with the members constituting the end faces of the grease supplying container 16.

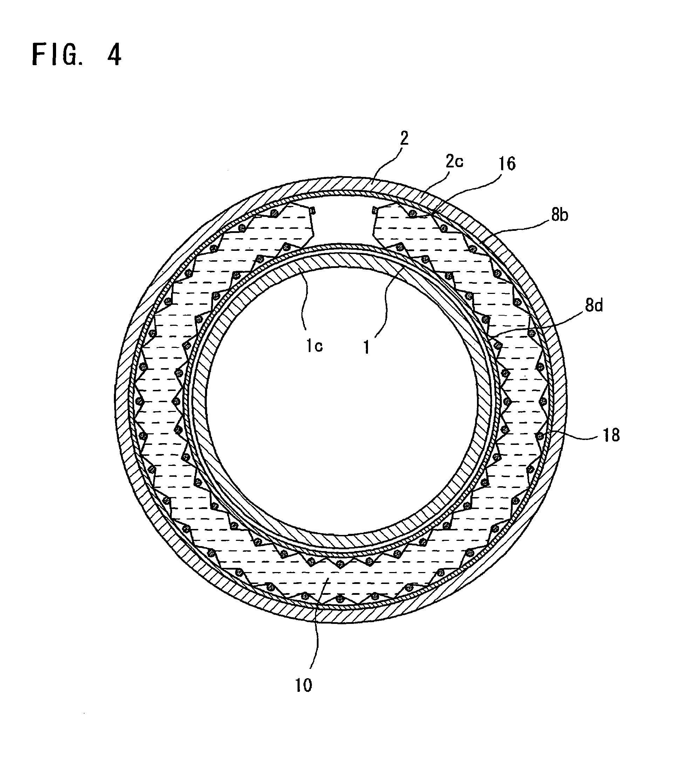

Fig. 4 shows a cross-sectional view, taken along line A - A, of a case in which the grease supplying container 16 shown in Fig. 3 is applied instead of the grease supplying container 6 in the rolling bearing device shown in Fig. 1.

The elastic grease supplying container 16, which possesses the restoring property for returning to the original shape when the grease supplying container 16 is extended or contracted and which has grease 10 filled therein and has the nozzle 5 for supplying it to the vicinities of the rolling elements, is disposed between the first bearing ring member 1 and the second bearing ring member 2. The grease supplying container 16 is disposed in a circular arc shape in the recess 8a of the annular holding member 8, and the nozzle 5 is inserted in the hole of the lateral portion 8c of the annular holding member 8. The cover member 9 is fitted in the opening of the recess 8a on the opposite side to the rolling element side, as viewed in the axial direction, of the annular holding member 8, and the nozzle 5 projects from the annular holding member 8. The grease supplying container 16 is urged toward the rolling element side in the axial direction by the urging projecting portion 9c, so that the annular projecting portion 5a of the nozzle 5 is in surface contact with the recess 8a-side surface of the lateral portion 8c of the annular holding member 8. The opening at the inside diameter portion of the one end of the nozzle 5 is located radially outwardly of the first bearing ring member 1 and radially inwardly of the retainer 4 in a range in which the first raceway 1a and the retainer 4 radially overlap. The nozzle 5 is in non-contact with the first bearing ring member 1, the retainer 4, and the rolling elements 3. The grease 10 is filled in the grease supplying container 16 in the state in which the grease supplying container 16 is extended. Further, the resilient member 8 for extending or contracting the grease supplying container 16 is provided around the outer periphery of the grease supplying container 16.

In the rolling bearing device shown in Fig. 4, since the grease 10 is filled in the grease supplying container 16 in the state in which the grease supplying container 16 is extended, the grease supplying container 16 has the restoring force allowing the grease supplying container 16 to return to its original shape. In addition, the force for returning the grease supplying container 16 to its original shape is imparted to the grease supplying container 16 by the resilient member 8. Accordingly, while the rolling bearing device is being used, the grease 10 in the grease supplying container 16 is supplied by small amounts toward the first raceway 1a (not shown) through the nozzle (not shown). Unlike the conventional lubricating oil, this grease 10 has small fluidity and is therefore difficult to flow out from the interior of the bearing device to the outside, so that it is possible to maintain over extended periods of time the lubrication of the rolling contact portions and sliding contact portions of the rolling bearing device.

Thus, in the rolling bearing device in accordance with the invention, not a base oil of lubricating oil or grease but the grease 10 having small fluidity is used, and this grease 10 is supplied to the vicinities of the first raceway 1a and the rolling elements by making use of the restoring force of the grease supplying container itself and/or the restoring force of the resilient member. Since the grease 10 has small fluidity, the grease 10 is difficult to flow out from the bearing interior to its outside, and can be held in the vicinities of the first raceway 1a and the rolling elements over extended periods of time.

Accordingly, the rolling bearing device in accordance with the invention is able to maintain over extended periods of time the lubrication of the rolling contact portions of the first raceway 1a and the rolling elements 3, the rolling contact portions of the second raceway 2a and the rolling elements 3 through the grease which moves in consequence of the rolling of the rolling elements, the sliding contact portions of the rolling elements 3 and the pocket-defining surfaces of the retainer 4 defining the pockets 4a, and the sliding contact surfaces between the outer peripheral surface of the retainer 4 and the inner peripheral surface (shoulder portion) 2b of the second bearing ring member 2. For this reason, the rolling bearing device in accordance with the invention can be suitably used for such as the main spindle of a machine tool.

It should be noted that although in the above-described two embodiments the nozzle 5 is arranged such that the opening at the inside diameter portion of the one end thereof is located toward the first raceway 1a of the first bearing ring member 1 radially inwardly of the retainer 4 and radially outwardly of the first bearing ring member 1 in the range in which the retainer 4 and the first bearing ring member 1 radially overlap, the nozzle 5 may be arranged such that the opening at the inside diameter portion of the one end thereof is located toward the second raceway 2a of the second bearing ring member 2 radially outwardly of the retainer 4 and radially inwardly of the second bearing ring member 2 in the range in which the retainer 4 and the second bearing ring member 2 radially overlap.

In addition, although in the above-described two embodiments one grease supplying container 6 is disposed in a circular arc shape in the recess 8a of the annular holding member 8, and the grease is supplied toward the raceway (rolling contact portion) of the rolling bearing device B from one nozzle 5 attached to one end of the grease supplying container 6, a plurality of grease supplying containers 6 may be disposed in a circular arc shape in the recess 8a of the annular holding member 8, and the grease may be supplied toward the raceway (rolling contact portion) of the rolling bearing device B from the respective one nozzles 5 attached to the respective grease supplying containers 6. In this case, the grease which is filled in the interior space of the respective grease supplying container should preferably be of the same kind of grease. In addition, although in such a case the nozzles are disposed at predetermined intervals in the circumferential direction of the raceway of the rolling bearing device B, in this case the inside diameter and/or the length of the inside diameter portion of each nozzle may be varied such that the amount of grease supplied to a portion where the lubricating conditions are severe (e.g., a portion where the radial load is applied) becomes large. In addition, the volumes of the interior spaces of the plurality of grease supplying containers may be respectively different, and particularly in a case where the amounts of grease supplied from the respective grease supplying containers are different, the volumes of the interior spaces of the grease supplying containers should preferably be determined in correspondence with the amounts, of .supply.

## Claims

1. A rolling bearing device comprising:
a first bearing ring member having a first raceway;
a.second bearing ring member having a second raceway;
a plurality of rolling elements interposed between the first raceway and the second raceway; and
an elastic grease supplying container disposed between the first bearing ring member and the second bearing ring member and having a nozzle for supplying grease as a lubricant toward at least one of the first raceway and the second raceway, the grease supplying container being shrunk to supply the grease.

2. The rolling bearing device according to claim 1, wherein the grease supplying container has a restoring property for returning to its original shape when the grease supplying container is extended.

3. The rolling bearing device according to claim 1 further comprising a resilient .member provided inside or outside the grease supplying container to cause the extended grease supplying container to shrink.

4. The rolling bearing device according to claim 1, wherein the grease is filled in the grease supplying container in a state in which the grease supplying container is extended.

5. The rolling bearing device according to claim 1, wherein the grease supplying container is formed of a flexible resin and has a bellows shape.

6. The rolling bearing device according to claim 1, wherein an orifice is disposed in the nozzle.
